# EUROPÄISCHE PATENTSCHRIFT

(11) **EP 2 273 138 B1**
(45) Veröffentlichungstag und Bekanntmachung des Hinweises auf die Patenterteilung: **09.05.2012**
(21) Anmeldenummer: 10167507.2
(22) Anmeldetag: 28.06.2010
(51) Int. Cl.: F16C 19/38, F16C 33/78, F16C 33/80

(54) **Radlageranordnung mit Spaltdichtung**
Wheel bearing assembly with labyrinth sealing
Agencement de roulement de roue doté d'un joint en labyrinthe

(30) Priorität: 01.07.2009 DE 102009031210
(43) Veröffentlichungstag der Anmeldung: 12.01.2011
(73) Patentinhaber: Schaeffler Technologies AG & Co. KG, 91074 Herzogenaurach (DE)
(72) Erfinder: Wilm, Bernhard, 97720, Nüdlingen (DE); De Boer, Johannes, 97532, Üchtelhausen (DE); Walter, Wilhelm, 97725, Poppenhausen (DE)

(56) Entgegenhaltungen:
- WO-A1-2009/067979
- DE-A1-102004 033 669
- JP-A- 2005 090 679

## Beschreibung

### Gebiet der Erfindung

Die Erfindung betrifft eine Radlageranordnung mit einer ersten Dichtungsanordnung zur Abdichtung eines Wälzraumes.

### Stand der Technik

### Hintergrund der Erfindung

Radlageranordnungen finden eine breite Verwendung, insbesondere im Kraftfahrzeugbereich, wie z.B. bei Personenkraftwagen oder Nutzkraftwagen. Radlageranordnungen funktionieren auf der Basis von Wälzlagern, die mittels Wälzkörpern ein rotierbares Radlagerteil auf, oder innerhalb eines feststehenden Radlagerteils lagern. Dadurch wird es möglich eine Radfelge am Radflansch anzubringen und rotierbar am feststehenden Fahrgestell zu befestigen und gleichzeitig die Fahrzeuglast über die rotierbaren Räder zu leiten.

Derartige Radlageranordnungen weisen an den Lagerteilen Laufbahnen für die Wälzkörper auf, wobei Wälzkörper und Laufbahnen vor Schmutz und Wasser geschützt werden müssen. Hierfür werden Dichtungsanordnungen vorgesehen, wie z.B. Kassettendichtungen oder andere Dichtungen, die auf schleifenden axialen und/oder schleifenden radialen Dichtlippen basieren, die von Trägerblechen in Position gehalten werden, um die notwendige Vorspannung für den Dichtkontakt zu übertragen.

In der Vergangenheit hat sich mehrfach als problematisch ausgestellt, dass stets ein Kompromiss zwischen Reibwert und Dichtwirkung der Dichtungsanordnung erlangt werden muss. Mit der Anzahl der schleifenden Dichtlippen erhöht sich die Dichtwirkung, aber auch der Reibwert und umgekehrt. Folglich weisen reibungsoptimierte Dichtungsanordnungen in der Regel weniger gute Dichtungswerte auf.

Nachteiligerweise hat auch jede Art von optimierter Dichtungsanordnung stets zu einem höheren Materialaufwand in Form von Bördelblechen, Dichtlippen, Fangrinnen, etc geführt, der die Kosten pro Radlagereinheit nachteiligerweise erhöht.

### Aufgabenstellung

### Zusammenfassung der Erfindung

Die Aufgabe der Erfindung ist daher eine reibungsarme Radlageranordnung anzugeben, die kosteneffizient herstellbar ist und den Wälzraum des Radlagers effektiv abdichtet.

Die Aufgabe wird durch eine Radlageranordnung mit einer ersten Dichtungsanordnung zur Abdichtung eines Wälzraumes gelöst, wobei die erste Dichtungsanordnung einen zumindest teilweise von einem Bestandteil einer Bremsanordnung gebildete Vordichtung ist und ein die Vordichtung bildender Bereich des Bestandteils in axialer Richtung unterschiedliche Innenradien aufweist.

Erfindungsgemäß besteht die Dichtungsanordnung der Radlageranordnung aus zwei Teilen, nämlich einer ersten Dichtungsanordnung und einer zweiten Dichtungsanordnung. Beide sind durch einen Zwischenraum voneinander getrennt, beziehungsweise im Hinblick auf den abzudichtenden Wälzraum des Radlagers hintereinandergeschaltet.

Erfindungsgemäß ist die Vordichtung eine Spaltdichtung. Der die Vordichtung bildende Bereich des Bestandteils der Bremsanordnung kann zusammen mit einem anderen Bauteil, wie z.B. dem Radträger, dem Radflansch oder auch anderen Bauteilen eine Spaltdichtung bilden, wobei der Dichtungsspalt komponentenweise sowohl in einer axialen und auch radialen Richtung in Bezug auf die Rotationsachse ausgerichtet sein kann. Gegebenenfalls weist der Dichtungsspalt mehrere axiale und radiale Richtungsänderungen auf, bildet also eine Labyrinthdichtung.

Erfindungsgemäß wird die Vordichtung zum Teil durch einen radial zwischen dem Bestandteil und einem Radträger angeordneten Ring gebildet. Dieser Ring kann beispielsweise ein Bördelringes aus Blech, sowie ein Kunststoffring oder ähnliches sein, der zusammen mit dem die Vordichtung bildenden Bereich des Bestandteils der Bremsanordnung eine Spaltdichtung bildet.

Unter Wälzraum wird ein Raum verstanden, der die Wälzkörper enthält, durch deren Laufbahnen auf Radnabe, Innenring und/oder Außenring begrenzt wird und mittels einer ersten Dichtungsanordnung und einer zweiten Dichtungsanordnung abgedichtet wird. Der Wälzraum kann beispielsweise aufgrund eines vorhandenen Schmiermittels auch als Fettkammer bezeichnet werden.

Vorteilhafterweise wird ein Bestandteil der Bremsanordnung dazu verwendet eine Vordichtung zu gewährleisten, die in einem Vordichtung bildenden Bereich unterschiedliche Innenradien aufweist, d.h., dass entlang der Rotationsachse des Radlagers eine Variation des Innenradius im besagten Bereich des Bestandteils stattfindet. Dies führt zu einer Ausnutzung der betriebsmäßigen Rotation der Bremsanordnung, die als solche formschlüssig mit dem drehenden Radlagerteil, nämlich der Radnabe, mittelbar oder unmittelbar verbunden ist. Damit ist es grundsätzlich möglich mit dem Vordichtung bildenden Bereich des Bestandteils der Bremsanordnung eine Dichtwirkung zu erzielen und die Schleuderwirkung der Bremsanordnung vorteilhaft einzusetzen. Die Schleuderwirkung tritt zunächst in radialer Richtung ein. Aufgrund der unterschiedlichen Innenradien wird diese jedoch in eine teilweise axiale Bewegung des vorhandenen Schmutzes, beziehungsweise eingedrungene Flüssigkeiten, umgewandelt, um damit eine Förderung aus dem Dichtungsbereich heraus zu unterstützen.

Da die Schleuderwirkung der Bremsanordnung zur Dichtung des Wälzraumes aktiv beiträgt, kann bei der erfindungsgemäßen Vordichtung auch von einer dynamischen Vordichtung zur Abschirmung der Schmutzbeaufschlagung gesprochen werden.

Bei einer vorteilhaften Ausführungsform bildet der die Vordichtung bildende Bereich ein Konussegment, ein Segment eines Rotationsparaboloiden oder eine ähnliche rotationssymmetrische Funktion. Die genannten Formen unterstützen eine Umwandlung des radialen Schleudereffektes in eine teilweise axiale Förderung der Fremdpartikeln, beziehungsweise der eingedrungene Flüssigkeiten. Dabei ist es möglich den die Vordichtung bildenden Bereich derart auszuformen, dass die Förderwirkung optimal unterstützt wird. Dabei kann die Änderung des Innenradius über eine axiale Entfernung derart angepasst werden, dass zwischen der radiale und der axialen Komponente der Förderrichtung und Förderkraft optimal abgewogen wird.

Bei einer vorteilhaften Ausführungsform ist das Bestandteil der Bremsanordnung ein Befestigungsflansch, ein Scheibenhals oder eine Bremsscheibe. Zunächst ist es möglich, dass eines oder mehrere Bestandteile der Bremsanordnung an der Bildung der Spaltdichtung teilhaben. Vorteilhafterweise kann eines oder mehrere Bestandteile einen die Vordichtung bildenden Bereich aufweisen, der die oben genannte Förderwirkung mit einer axialen Richtungskomponente aufweist. Damit erlangen bereits ohnehin vorhandene Bauteile der Radlageranordnung eine weitere Funktion, d.h. leisten einen Beitrag zur Abdichtung des Wälzraumes. Vorteilhafterweise können Teile wie Radadapter und Achsstummel dabei eingespart werden.

Vorteilhafterweise weist der Befestigungsflansch eine Verstärkung auf, die es erlaubt die Biegewechselmomente derartig aufzunehmen, dass diese nicht in der Art negativ wirken, dass die Breite des Dichtungsspaltes beziehungsweise das Labyrinth negativ beeinflusst werden würde.

Bei einer vorteilhaften Ausführungsform ist der Ring am Radträger ausgeformt oder auf den Radträger aufgesetzt. Vorteilhaft ist, dass der Ring als nicht rotierendes Bestandteil trotzdem zur Dichtwirkung der Vordichtung beiträgt und zusammen mit dem die Vordichtung bildenden Bereich eine Spaltdichtung, beziehungsweise eine Labyrinthdichtung bildet. Daran ist vorteilhaft, dass sich der zur Dichtung herangezogene Bauraum nicht nur in axialer Richtung erstreckt, sondern sich durchaus auch, zumindest teilweise, in radialer Richtung erstrecken kann. Damit wird eine axiale Verbreiterung des Radlagers durch die radiale Anordnung der Vordichtung im Vergleich zur zweiten Dichtungsanordnung axial nicht verbreitert. Stattdessen führt der Zwischenraum zwischen Vordichtung und zweiter Dichtungsanordnung bauraumoptimierend zu mehr Anordnungsmöglichkeiten.

Vorteilhafterweise grenzt der Ring an den Zwischenraum, und kann damit auch eine Dichtwirkung zwischen Vordichtung und zweiter Dichtungsanordnung bewirken, beziehungsweise die Größe Zwischenraumes definieren.

Bei einer vorteilhaften Ausführungsform ist eine zweite Dichtungsanordnung zur Abdichtung des Wälzraumes radial zwischen zueinander relativ bewegbaren Radlagerteil angeordnet. Wichtig dabei ist, dass erste und zweite Dichtungsanordnung durch den Zwischenraum getrennt sind, wobei dies im Hinblick auf den Weg zu sehen ist, den Schmutzeintrag nimmt, um in den Wälzraum zu gelangen. Es ist durchaus möglich, dass beispielsweise erste und zweite Dichtungsanordnung in radialer Richtung zueinander angeordnet sind, jedoch der Zwischenraum axial zu beiden Dichtungsanordnungen angeordnet ist. Damit entsteht eine Labyrinthdichtung, die bauraumoptimiert ausgelegt ist.

Vorteilhafterweise weist die zweite Dichtungsanordnung wenigstens eine schleifende abdichtende Dichtlippe auf. Damit ist durch die dynamische Vordichtung eine schleifende Dichtlippe der zweiten Dichtungsanordnung vorteilhaft vor Umwelteinflüssen beziehungsweise Schmutzeintrag geschützt und verlängert somit die Lebensdauer des Radlagers.

Weitere bevorzugte Ausführungen und Weiterbildungen der Erfindung sind der Figurenbeschreibung und den Unteransprüchen zu entnehmen.

### Figurenbeschreibung

Im folgenden wird die Erfindung anhand des in der Figur dargestellten Ausführungsbeispiels näher beschreiben und erläutert.

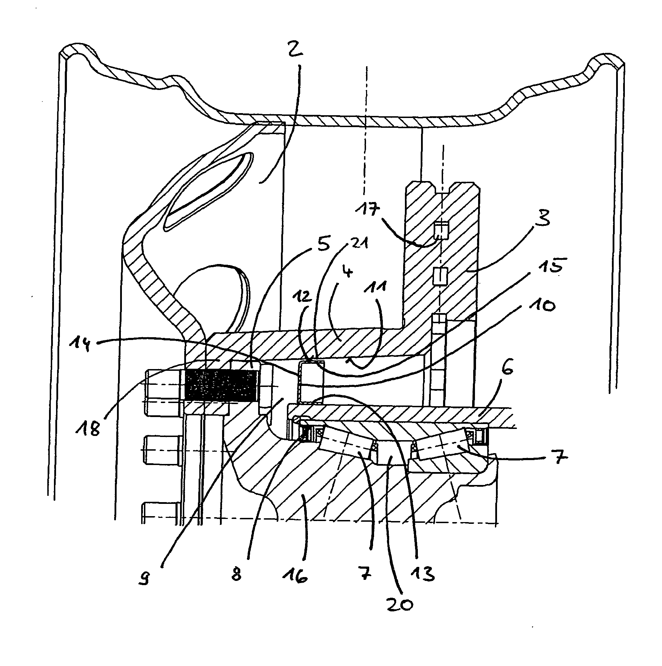

Fig. 1 zeigt eine Radlageranordnung im Längsschnitt mit einer Vordichtung.

Die Radlageranordnung weist ein Radlager mit einer Radnabe 16 auf, die wiederum einen Radflansch 5 aufweist, an dem sowohl eine Felge 2, als auch eine Bremsanordnung einer luftgekühlten Scheibenbremse angeschraubt ist.

Der abzudichtende Wälzraum 20 beinhaltet die befetteten Wälzkörper 7 und wird von deren Laufbahnen, sowie in axialer Richtung abdichtenden zweiten Dichtungsanordnungen begrenzt beziehungsweise abgedichtet. Eine der beiden Dichtungsanordnungen, nämlich die zweite Dichtungsanordnung 8, ist einer dynamischen Vordichtung über einen Zwischenraum 9 nachgeschaltet, d.h. nachgeordnet.

Der Zwischenraum 9 wird begrenzt durch axiale Flächen des Radflansches 5, Radialflächen der Radnabe 16 und teilweise durch den Radträger 6. Zudem wird der Zwischenraum 9 durch den Ring 10 und die zweite Dichtungsanordnung begrenzt. Der Ring 10 kann beispielsweise als Lagerring ausgeführt sein und eine durch Kaltumformung erzielte und eine - im Längsschnitt betrachtet - C-förmige Ausgestaltung aufweist. Dabei wird das "C" durch einen hohlzylindrischen Befestigungsteil 13, einen scheibenförmigen Teil 14 und einen leicht konischen, spaltbildenden Teil 15 gebildet. Die radial nach außen gerichtete Außenfläche des spaltbildenden Teiles 15 wird von einem Scheibenhals 4 der Bremsanordnung umfasst. Der Ring 10 bildet den Zwischenraum 9, der axial zur zweiten Dichtungsanordnung 8 und zu der durch den spaltbildenden Teil 15 und den Scheibenhals 4 gebildete Vordichtung, angeordnet ist.

Vorteilhafterweise wird die Dichtungsanordnung bauraumoptimiert ausgelegt, wenn der Ring 10 die zweite Dichtungsanordnung 8 umfasst, das heißt radial außerhalb derselben angeordnet ist. Dem steht nicht entgegen, dass zwischen der zweiten Dichtungsanordnung 8 und dem Ring 10 der Radträgers 6 angeordnet sein kann, auf dem ggf. der Ring 10 mittels Presssitz angebracht ist. Alternativ ist der Ring 10 auch einstückig mit dem Radträger 6 ausführbar, kann also beispielsweise aus dem gleichen Material geformt sein.

Der vorliegende Ring 10 ist aus kaltumgeformten Blech hergestellt und ist daher gewichtsoptimiert, wobei gleichzeitig die optimale Spaltbreite zwischen dem Spalt bildenden Teil und einem spaltbildenden Bereich 21 des Scheibenhalses 4 einfach eingestellt werden kann. Gleichermaßen kann eine gewünschte Länge des Dichtungsspaltes durch eine entsprechende Länge des spaltbildenden Teiles 15 erreicht werden.

Vorteilhafterweise wird in den Zwischenraum 9 eingedrungener Schmutz und Wasser durch die Bewegung der rotierenden Lagerteile, nämlich das Radflansches 5 und der Radnabe 16, sowie der rotierenden Bremsanordnung, inklusive des Scheibenhalses 4, durch die Rotation zunächst radial an die Innenfläche 11 des Scheibenhalses 4 befördert, von wo aus es hauptsächlich in axialer Richtung durch den Dichtungsspalt, am spaltbildenden Bereich 21 entlang, aus dem Zwischenraum 9 herausbefördert wird.

Denkbar ist auch, dass eine stärkere Konizität des Scheibenhalses 4 zu einer schnelleren Entfernung des Schmutzeintrags aus dem Zwischenraum 9 führt, sofern die Bremsscheibe 3 mit Ihren Ausnehmungen 17 zur Luftkühlung axial näher liegend am Zwischenraum 9 angeordnet werden kann. Die Änderung der Innenradien in spaltbildenden Bereich 21 schreitet damit in axialer Richtung schneller fort, beziehungsweise kann den baulichen Umständen entsprechend angepasst werden.

Vorteilhafterweise ist es auch möglich alternativ zum Ring 10 einen anderen Ring vorzusehen, der eine Spaltdichtung zusammen mit der Bremsscheibe 3, oder auch mit dem Befestigungsflansch 18 bildet, um damit einen größeren, beziehungsweise kleineren Zwischenraum 9 herzustellen.

Bei einem kleineren Zwischenraum 9 ist es beispielsweise möglich die Bremsanordnung materialarm auszugestalten, weil ein Torsionsmoment die Spaltdichtung aufgrund ihrer Nähe zum Radflansch 5 die Breite des Dichtungsspaltes nur unwesentlich beeinflusst.

Bei einem größeren Zwischenraum 9 ist auch das Labyrinth zwischen erster und zweiter Dichtungsanordnung großzügig ausgestaltet und beinhaltet einen axial langgestreckten Weg des Schmutzeintrages, der die Dichtungswirkung weiter verbessert.

Zusammenfassend betrifft die Erfindung eine Radlageranordnung mit einer ersten Dichtungsanordnung zur Abdichtung eines Wälzraumes. Es soll eine kostengünstige und dichtungsoptimierte Radlageranordnung angegeben werden. Die erste Dichtungsanordnung ist eine zumindest teilweise von einem Bestandteil einer Bremsanordnung gebildete Vordichtung. Ein die Vordichtung bildender Bereich des Bestandteils weist in axialer Richtung unterschiedliche Innenradien auf, womit mittels des Schleudereffektes Schmutzeintrag aus einem Zwischenraum zwischen Vordichtung und einer zweiten Dichtungsanordnung vom abgedichteten Wälzraum weg befördert werden kann. Dabei übernehmen vorteilhafterweise ein oder mehrere Bestandteile der Bremsanordnung zusätzlich eine Dichtwirkung, das heißt, sie tragen zu einer Vordichtung des Wälzraumes bei.

### Bezugszeichenliste

- 2: Felge
- 3: Bremsscheibe
- 4: Scheibenhals
- 5: Radflansch
- 6: Radträger
- 7: Wälzkörper
- 8: zweite Dichtungsanordnung
- 9: Zwischenraum
- 10: Ring
- 11: Innenfläche
- 12: radiale Außenfläche
- 13: Befestigungsteil
- 14: scheibenförmiger Teil
- 15: spaltbildender Teil
- 16: Radnabe
- 17: Ausnehmung
- 18: Befestigungsflansch
- 20: Wälzraum
- 21: spaltbildender Bereich

## Patentansprüche

1. Radlageranordnung mit einer ersten Dichtungsanordnung zur Abdichtung eines Wälzraumes (20) **dadurch gekennzeichnet, daß** die erste Dichtungsanordnung eine zumindest teilweise von einem Bestandteil (3, 4, 18) einer Bremsanordnung (3,4,18) gebildete Spaltdichtung ist und ein die Spaltdichtung bildender Bereich des Bestandteils (3,4,18) in axialer Richtung unterschiedliche Innenradien aufweist, wobei die Spaltdichtung zum Teil durch einen radial zwischen dem Bestandteil (3,4,18) und einem am Radträger (6) angeordneten Ring (10) gebildet wird.

2. Radlageranordnung nach Anspruch 1, wobei der die Spaltdichtung bildende Bereich (21) ein Konussegment, ein Segment eines Rotationsparaboloiden oder eine ähnliche rotationssymmetrische Funktion bildet.

3. Radlageranordnung nach Anspruch 1, wobei das Bestandteil (3, 4, 18) der Bremsanordnung (3, 4, 18) ein Befestigungsflansch (18), ein Scheibenhals (4) oder eine Bremsscheibe (3) ist.

4. Radlageranordnung nach Anspruch 1, wobei der Ring (10) am Radträger (6) ausgeformt oder auf diesen aufgesetzt ist.

5. Radlageranordnung nach einem der vorhergehenden Ansprüche, wobei eine zweite Dichtungsanordnung (8) zur Abdichtung des Wälzraumes (20) radial zwischen zueinander relativ bewegbaren Radlagerteilen angeordnet ist.

6. Radlageranordnung nach Anspruch 5, wobei die zweite Dichtungsanordnung (8) wenigstens eine schleifend abdichtende Dichtlippe aufweist.

## Claims

1. Wheel bearing arrangement having a first seal arrangement for sealing a rolling space (20), **characterized in that** the first seal arrangement is a gap seal which is formed at least partially by a constituent part (3, 4, 18) of a brake arrangement (3, 4, 18), and a region of the constituent part (3, 4, 18), which region forms the gap seal, has different inner radii in the axial direction, the gap seal being formed partly by a ring (10) which is arranged radially between the constituent part (3, 4, 18) and a wheel support (6).

2. Wheel bearing arrangement according to Claim 1, the region (21) which forms the gap seal forming a cone segment, a segment of a paraboloid of revolution or a similar rotationally symmetrical function.

3. Wheel bearing arrangement according to Claim 1, the constituent part (3, 4, 18) of the brake arrangement (3, 4, 18) being a fastening flange (18), a disc neck (4) or a brake disc (3).

4. Wheel bearing arrangement according to Claim 1, the ring (10) being formed on the wheel support (6) or being placed onto the latter.

5. Wheel bearing arrangement according to one of the preceding claims, a second seal arrangement (8) for sealing the rolling space (20) being arranged radially between wheel bearing parts which can be moved relative to one another.

6. Wheel bearing arrangement according to Claim 5, the second seal arrangement (8) having at least one sealing lip which seals in a rubbing manner.

## Revendications

1. Agencement de palier de roue comprenant un premier agencement d'étanchéité pour l'étanchéité d'un espace de roulement (20), **caractérisé en ce que** le premier agencement d'étanchéité est une garniture d'étanchéité à fente formée au moins en partie par un constituant (3, 4, 18) d'un agencement de freinage (3, 4, 18), et une région du constituant (3, 4, 18) formant la garniture d'étanchéité à fente présente des rayons internes différents dans la direction axiale, la garniture d'étanchéité à fente étant formée en partie par une bague (10) disposée radialement entre le constituant (3, 4, 18) et un support de roue (6).

2. Agencement de palier de roue selon la revendication 1, dans lequel la région (21) formant la garniture d'étanchéité à fente forme un segment conique, un segment d'un paraboloïde de révolution ou une fonction à symétrie de révolution similaire.

3. Agencement de palier de roue selon la revendication 1, dans lequel le constituant (3, 4, 18) de l'agencement de freinage (3, 4, 18) est une bride de fixation (18), un col de disque (4) ou un disque de frein (3).

4. Agencement de palier de roue selon la revendication 1, dans lequel la bague (10) est formée sur le support de roue (6) ou est posée sur celui-ci.

5. Agencement de palier de roue selon l'une quelconque des revendications précédentes, dans lequel un deuxième agencement d'étanchéité (8) pour réaliser l'étanchéité de l'espace de roulement (20) est disposé radialement entre des parties de palier de roue déplaçables l'une par rapport à l'autre.

6. Agencement de palier de roue selon la revendication 5, dans lequel le deuxième agencement d'étanchéité (8) présente au moins une lèvre d'étanchéité réalisant l'étanchéité par frottement.
